# EUROPEAN PATENT SPECIFICATION

(11) **EP 1 414 756 B1**
(45) Date of publication and mention of the grant of the patent: **14.03.2007**
(21) Application number: 02760234.1
(22) Date of filing: 10.07.2002
(51) Int. Cl.: C02F 3/32

(54) **ARTIFICIAL PHYTOPURIFICATION SYSTEM**
KÜNSTLICHES PFLANZENREINIGUNGSSYSTEM
SYSTEME ARTIFICIEL DE PHYTOPURIFICATION

(30) Priority: 13.07.2001 IT TO20010691
(43) Date of publication of application: 06.05.2004
(73) Proprietor: Marchello, Giovanni Battista, 10011 Aglie' Canavese (Torino) (IT)
(72) Inventor: Marchello, Giovanni Battista, 10011 Aglie' Canavese (Torino) (IT)
(74) Representative: Comoglio, Elena
(86) International application number: PCT/EP2002/007676
(87) International publication number: WO 2003/006386

(56) References cited:
- EP-A- 0 286 582
- EP-A- 0 390 265
- EP-A- 0 870 427
- DE-A- 19 625 328
- US-A- 3 792 100
- US-A- 5 951 866

## Description

The present invention relates to an artificial phytopurification system.

Artificial phytopurification systems, also known by the English term "constructed wetlands", are artificial systems which are used for the treatment of polluted water.

Water has an intrinsic capacity for self-purification, that is, for eliminating or at least reducing the concentration of pollutants by chemical/physical and biological mechanisms but, when there are high concentrations of pollutants, it is necessary to use suitably designed systems which can promote this process.

These designed systems take the name of artificial phytopurification systems.

An artificial phytopurification system is generally constituted by a filtering bed of inert, porous material in which emersed, rooted, macrophytic plants are planted, and through which the polluted water is made to pass.

According to the technology used, artificial phytopurification systems can be divided into:
- constructed wetlands with subsurface horizontal flow (S.F.S), and
- constructed wetlands with vertical intermittent flow (V.I.S.).

Both of the above-mentioned systems are constituted by tanks or channels, the bottoms of which are rendered impermeable by a layer of clay or high-density polyethylene (HDPE) sheets, and which are filled with a bed of inert, porous material which may have a uniform or variable particle size.

The inert filling materials commonly used for this purpose are sand and gravel.

The geotechnical characteristics of these materials have, on average, the values given below:

| | |
|---|---|
| Porosity % | 48 ÷ 52 |
| Permeability m/h | 230 ÷ 320 |
| Diameter min.-max. | 2-10 ÷ 4-10 |

As well as acting as a filter, the bed of inert material also constitutes the substrate on which the roots of the emersed macrophytes used for the phytopurification develop.

For this purpose, emersed macrophytes of various types may be used, amongst which common reed (Phragmites australis), reed mace (Typha latifolia), and bulrush (Scripus lacustris) may be mentioned, by way of example.

The depth of the bed is generally between 0.5 and 1 m, according to the type of macrophyte used.

For example, for Phragmites australis, the depth of the bed is generally 0.8 m.

In both of the above-mentioned system types, the effluent is supplied through piping in a manner such that the water level is always kept below the surface of the bed. The fact that the bed is saturated with water but not completely submerged deters insects and reduces the production of odours and also prevents the liquid from freezing in winter.

The bottoms of S.F.S. and V.I.S. systems are generally flat or have a slight downward slope (of 1-2%) to facilitate water drainage. The upper surface, however, is generally horizontal.

The difference between S.F.S. and V.I.S. systems is that, in the former, the effluent is supplied continuously and flows through the bed in a horizontal direction whereas, in the latter, the effluent admitted is distributed intermittently over the entire surface of the bed, passing through it perpendicularly by percolation.

In both of the above-mentioned systems, the vegetation plays a fundamental role since it transfers oxygen through the root systems and the rhizomes to the bottom of the treatment tanks and ensures that an environment suitable for the establishment of the aerobic micro-organisms which are responsible for the biological treatment is formed, below the water level.

Emersed, rooted, macrophytes in fact have a large capacity for the transfer of oxygen from the aerial parts to the submerged parts of the plant. Atmospheric oxygen is thus absorbed by the leaves and by the stems and is transferred and released at rhizosphere level.

Aerobic microzones are thus created around the roots and the rhizomes in the anaerobic bed and the conditions which are essential in order for the biological pollutant-removal processes to take place effectively are brought about.

Amongst the above-mentioned emersed macrophytes, the most effective, particularly for reducing bacteria, is Phragmites australis which, by virtue of the particular structure of its aerenchyma, creates an oxidizing zone around the roots, thus promoting the oxidative processes.

These plant species grow, developing a dense intertwinement of rhizomes and roots which, since they extend vertically and horizontally through the bed, help to create the hydraulic characteristics of the bed which are essential to achieve an optimal flow within the system.

It has been estimated that the macrophytes can transfer from 5 to 45 g of oxygen per day, per square meter of wet surface, depending on the density of the plants, the oxygen requirement of the saturated ground, and the permeability characteristics of the roots.

In particular, with regard to Phragmites, the oxygen-transfer process is particularly effective and, moreover, since its rhizomes penetrate to a greater depth than those of other species, they reduce the regions in which anaerobic processes, which would lead to the development of malodorous gases such as ammonia, hydrogen sulphide, mercaptans, etc., can take place.

In phytopurification systems, purification efficiency remains fairly constant throughout the year, since the purification processes take place mainly at the level of the root system which, since it is submerged, is not greatly affected by external climatic variations and is also active in the coldest months; the accumulation of litter on the surface also helps to create thermal protection.

The absorption of nutrients, particularly nitrogen and phosphorus, by these plant species is extremely low in comparison with the quantity of nutrients removed by the biochemical processes which take place in the rhizosphere, which leads to low plant biomass production.

This reduces the need to remove the plant biomass periodically, permitting reduced and easy maintenance which can be performed even by unskilled personnel.

Generally, the planting of 4 seedlings/m² ensures a good coverage of the bed and propagation of the plants within short periods of time.

However, both of the above-described systems have a very limited purification capacity and, in order to achieve satisfactory results, it is necessary to provide quite extensive treatment areas.

In fact, with the use of these systems, the minimum area required to achieve a final effluent conforming to the regulations in force (Table A of decree law No. 152 of 11/5/1999, appendix 5), for treatment of effluents from domestic premises, is 3-5 m² per equivalent inhabitant, with average water flows of 0.1-0.15 m³ per day per equivalent inhabitant.

For this reason, the use of artificial phytopurification systems, particularly in Italy, where the areas available are in short supply, has not become widespread, as in other countries, but is limited to small systems with a small number of users.

The object of the present invention is therefore to increase the purification capacity of both S.F.S. and V.I.S. phytopurification systems, permitting a reduction in the treatment areas which are required to produce effluents conforming to the regulations in force.

This object has been achieved by means of a phytopurification system according to the preamble to Claim 1, characterized in that the bed of inert material is constituted by zeolitite.

Zeolitite is a rock of volcanic origin containing a quantity of natural zeolite which varies from about 20 to 90%.

Zeolites are hydrated aluminosilicates of alkali-metals and alkaline-earth metals, belonging to the tectosilicate family.

Their three-dimensional structure is characterized by the presence of large cavities which communicate with each other and with the exterior by means of channels.

For this reason, zeolites have a large specific surface which is, on average, about 200-500 m²/g, according to type.

The large specific surface is particularly advantageous for the use of zeolitites as filling materials in phytopurification systems, since it permits greater growth and multiplication of the micro-organisms which are responsible for the organic-material degradation processes.

Moreover, by virtue of the high cation-exchange capacity which is characteristic of zeolites, these minerals can absorb cations of various kinds from the pollutant effluents and can retain them within their own structure, allowing the water thus purified to flow away.

The cations absorbed are then very slowly yielded back to the exterior, again by cation exchange, (except for Cr III which remains immobilized in the zeolite) and are thus made available for the oxidizing action of the micro-organisms which are present in the rhizosphere.

Since the inside diameters of the channels vary depending on the type of zeolite considered, each type of zeolite is characterized by a precise selectivity with respect to different cations.

For example, zeolitites based on phillipsite or clinoptilolite have a marked selectivity for ammonium ions and radionuclides, whereas zeolitite based on chabazite has a marked selectivity for heavy metals.

In particular, the ammonium ion - which, amongst the various pollutant cations, is that which is generally present in the greatest concentration - is captured by the zeolitite by cation exchange and is then yielded back at lower concentration levels such that the micro-organisms present in the rhizosphere, such as Nitrosomonas and Nitrobacter, can oxidize it to nitrate ions, of which some are used by the plants and some are reduced to gaseous nitrogen (N₂) by denitrifying bacteria and then released into the atmosphere.

When heavy metals are present in the effluent, they are also captured by the zeolitite and then yielded back at lower concentration levels such that the roots of the plants can absorb them and transfer them to the aerial portion (the stem and the leaves), where they accumulate.

Periodically, when the plants are cut down, the heavy metals recovered from the effluent can be removed with the greenery.

The cuttings can be incinerated and the ash, suitably rendered inert, can be disposed of.

In the phytopurification systems of the present invention, zeolitites preferably based on analcime, chabazite, clinoptilolite, faujasite, laumontite, mordenite, phillipsite, or mixtures thereof are therefore used as filling material. Even more preferably, the zeolitites have a cation-exchange capacity of between 0.3 and 2.5 meq/g, more preferably between 0.6 and 1.8 meq/g.

Moreover, the zeolitites preferably have a zeolite content within the range of from 30 to 80%, even more preferably from 50 to 70%.

Moreover, in a particularly preferred embodiment of the phytopurification systems of the present invention, the emersed, rooted macrophytes used for the phytopurification are mycorrhizated plants.

The term "mycorrhiza" (from the Greek mykes: fungus and rhiza: root) indicates a symbiotic association between fungi and plant roots.

It is known that mycorrhizae are very useful to the host which possesses them; the fungus absorbs nutritious elements from the soil (in particular phosphorus, nitrogen and potassium, as well as some micro-elements) and yields them to the plant, thus performing a biofertilizing role.

The formation of mycorrhizae also brings the plant other advantages such as, for example, a greater root water conductivity, that is, a greater capacity to absorb water through the roots.

Moreover, the formation of mycorrhizae protects the plant from attack by some root pathogens.

The sum of these effects ensures the mycorrhizated plant better growth than a non-mycorrhizated plant.

The use of mycorrhizated plants in phytopurification systems has further specific advantages connected with increased root mass and an increased ability of the roots to probe the ground. Moreover, it has been observed that the presence of mycorrhizae increases oxygen transfer from the aerial portion to the submerged portion, thus strengthening the biochemical processes which take place in the rhizosphere.

In particular, mycorrhizated plants can perform improved and more selective absorption of the various heavy metals which may be present in the effluent.

The mycorrhizated plants to be used in the phytopurification system of the present invention can be obtained, for example, by arbuscular mycorrhizal inoculations.

For this purpose, Phragmites australis, Typha latifolia and Scripus lacustris, mycorrhizated by symbiotic fungi belonging to the genus Glomus, Sclerocystis, Scutellospora, Acaulospora, Entrophspora and Gigaspora are greatly preferred.

It has been estimated that the phytopurification systems according to the preferred embodiment, in which the bed is constituted by zeolitite and the plants are mycorrhizated, require only 0.5-1.5 m² of area per equivalent inhabitant to treat effluent water from domestic premises with water flowrates of 0.2-0.3 m³ per equivalent inhabitant per day.

In other words, the phytopurification systems according to this embodiment enable optimal results to be achieved with a reduction of the treatment area required per equivalent inhabitant to less than 1/3, and with twice the flow-rate of water.

By virtue of the increase in their purification capacity, the phytopurification systems of the invention can therefore be used to treat both industrial discharges and urban discharges, in particular:
- effluent water from domestic premises with up to 200 equivalent inhabitant (E.I.) users
- effluent waters from campsites or groups of houses
- effluent water from rural sites
- effluent water from agro-food processes
- percolates from dumps treated in situ
- surface waters to be rendered drinkable.

Another possible use of the phytopurification systems of the invention is for reducing the problem of residual pollution in effluents coming from purifiers.

For this purpose, a phytopurification system may be interposed between the purifier outlet and the recipient; on the one hand, this improves the quality of the water reintroduced into the environment and, on the other hand, it makes up for any malfunctions of the purifiers.

The following example is provided purely by way of illustration and should not be understood as limiting the scope of the present invention as defined in the appended claims.

### EXAMPLE

This example gives the results obtained in a test performed on effluent which was obtained from a chemical/physical installation and which was treated for about one year by means of a "constructed wetland" made of sheet iron and having the following characteristics:

| | |
|---|---|
| length | 2.50 m |
| width | 1.25 m |
| depth | 0.90 m |
| area | 3.125 m² |
| volume | 2,812 m³ |
| volume of zeolitite | 2,500 m³ |

The "wetland" was supplied by a pipe of 2.5 cm diameter and 1.2 m long with distribution holes, which was disposed on the zeolitite bed at one end of the tank.

A 4 cm-diameter pipe, connected to a perforated collection pipe disposed in the bottom of the tank and covered by the zeolitite, emerged from the bottom of the tank at the other end.

This pipe was connected to a siphon situated 5 cm below the level reached by the bed of the "wetland".

A natural zeolitite based on chabazite and phillipsite, having a total zeolitite concentration of 61% and a mean cation-exchange capacity of 1.12 meq/g with respect to the ammonium ion and a specific area of 265 m²/g was used as filling material.

The zeolitite used had the following particle sizes, expressed in mm: 0.5-1.5, 1-3, 3-6, 8-15.

The zeolitite was arranged in the tank as follows, starting from the bottom:

| Level (cm) | Particle size (mm) |
|---|---|
| 0-10 | 8-15 |
| 10-20 | 3-6 |
| 20-30 | 1-3 |
| 30-40 | 0.5-1.5 |
| 40-50 | 3-6 |
| 50-60 | 1-3 |
| 60-80 | 0.5-1.5 |

The total quantity of zeolitite used was 2100 kg.

As marsh plants, 16 Phragmites australis plants, mycorrhizated with symbiotic fungi belonging to the genus Glomus, provided from a nursery by a firm specialized in the field, were planted.

The water to be treated came from a chemical/physical installation and was pre-filtered.

In view of the characteristics of the effluent (an analysis of which is given below) the flow-rate to the "wetland" was set at 12 1/hour, which is equal to 288 1/day.

The test continued for precisely 323 days.

The first sample of treated water was taken on the 150th day (after 43,200 litres of effluent had been treated) during a period in which the plants were not yet fully developed.
Table 1 gives the concentrations of the various pollutants present in the effluent input and output (that is, taken on the 150th day) from which the percentage reductions were calculated.

**Table 1**

| Pollutant | Conc. input (mg/l) | Conc. output (mg/l) | % reduction |
|---|---|---|---|
| Suspended material (total) | 132 | 16 | -88 |
| C. O. D. | 5546 | 776 | -86 |
| Aluminium | 0.36 | 0.34 | - |
| Arsenic | 0.01 | 0.01 | - |
| Cadmium | 0.005 | 0.005 | - |
| Chromium III | 0.01 | 0.008 | -20 |
| Chromium VI | 0.02 | 0.02 | - |
| Iron | 4.05 | 1.7 | -58 |
| Manganese | 0.42 | 0.20 | -52 |
| Mercury | 0.005 | 0.005 | - |
| Nickel | 0.36 | 0.20 | -42 |
| Lead | 0.03 | 0.01 | -66 |
| Copper | 0.19 | 0.08 | -56 |
| Selenium | 0.01 | 0.01 | - |
| Zinc | 1.95 | 0.52 | -58 |
| Sulphates | 1154 | 92 | -92 |
| Chlorides | 1460 | 1452 | - |
| Phosphorus | 1.64 | 0.98 | -40 |
| Ammoniacal nitrogen | 95 | 4.75 | -95 |
| Nitrous nitrogen | 0.02 | 0.01 | -50 |
| Nitric nitrogen | 24.1 | 1.2 | -95 |
| mineral oils | 152 | 9 | -94 |
| Aldehydes | 3.52 | 1.41 | -60 |
| Chlorinated solvents | 0.008 | 0.003 | -62 |
| Anionic surfactants | 3.6 | 2.12 | -41 |
| Non-ionic surfactants | 390 | 19.5 | -95 |
| pH | 6.94 | 7.12 | - |

The second water sample was taken on the 322nd day (after 92,736 litres of effluent water had been treated) in a period in which, although the plants were not fully developed, they were well advanced. Table 2 gives the results obtained.

**Table 2**

| | Conc. input (mg/l) | Conc. output (mg/l) | % reduction |
|---|---|---|---|
| Suspended material (total) | 140 | 9.8 | -93 |
| C. O. D. | 5124 | 154 | -97 |
| Aluminium | 0.26 | 0.26 | - |
| Arsenic | 0.01 | 0.01 | - |
| Cadmium | 0.005 | 0.05 | - |
| Chromium III | 0.005 | 0.005 | - |
| Chromium VI | 0.01 | 0.01 | - |
| Iron | 4.42 | 1.55 | -65 |
| Manganese | 0.25 | 0.1 | -60 |
| Mercury | 0.005 | 0.005 | - |
| Nickel | 0.42 | 0.20 | -52 |
| Lead | 0.15 | 0.02 | -80 |
| Copper | 0.24 | 0.08 | -65 |
| Selenium | 0.01 | 0.01 | - |
| Zinc | 2.25 | 0.79 | -65 |
| Sulphates | 998 | 80 | -92 |
| Chlorides | 1250 | 1246 | - |
| Phosphorus | 1.85 | 0.55 | -70 |
| Amm. nitrogen | 105 | 3.15 | -97 |
| Nitrous nitrogen | 0.03 | 0.01 | -54 |
| Nitric nitrogen | 32.4 | 0.97 | -97 |
| Mineral oils | 160 | 9.6 | -94 |
| Aldehydes | 2.64 | 0.80 | -70 |
| Chlorinated solvents | 0.006 | 0.002 | -62 |
| Anionic surfactants | 3.2 | 0.86 | - 73 |
| Non-ionic surfact. | 258 | 10.3 | -96 |
| PH | 6.8 | 7.1 | - |

These results, which were obtained by testing for less than 12 months and with marsh plants which were still not fully developed (they require at least 18/24 months) and which therefore made a reduced contribution to the treatment, already showed that the artificial phytopurification system of the present invention is very effective in purifying effluent water, even when it has a particularly heavy pollutant load such as that of the test reported above.

## Claims

1. An artificial phytopurification system of the subsurface horizontal flow (S.F.S.) or intermittent vertical flow (V.I.S.) type, comprising a bed of inert material having a depth of between 0,5 and 1,0 m and saturated with water, in which emersed, rooted, macrophytes are planted, **characterized in that** the inert material is zeolitite containing 30 to 80% of natural zeolite.

2. A system according to Claim 1 in which the zeolitite has a zeolite content within the range of 50-70%.

3. A system according to claim 1 or 2 in which the natural zeolite is selected from the group consisting of analcime, chabazite, clinoptilolite, faujasite, laumontite, mordenite, phillipsite, and mixtures thereof.

4. A system according to any one of claims 1 to 3 in which the zeolite has a cation-exchange capacity within the range of 0.3 to 2.5 meq/g.

5. A system according to Claim 4 in which the zeolite has a cation-exchange capacity within the range of 0.6 to 1.8 meq/g.

6. A system according to any one of Claims 1 to 5 in which the zeolite has a particle size within the range from 0.5 to 35 mm.

7. A system according to Claim 6 in which the particle size of the zeolitite is variable within the bed.

8. A system according to any one of the preceding claims in which the emersed macrophytes are mycorrhizated.

9. A system according to Claim 8 in which the mycorrhizated emersed macrophytes are obtainable by arbuscular mycorrhizal inoculation.

10. A system according to Claim 8 or Claim 9 in which the emersed macrophytes are selected from the group consisting of Phragmites australis, Typha, Scripus, and combinations thereof.

11. Use of a phytopurification system according to any one of the preceding claims for the treatment of effluent water from domestic premises.

12. Use of a phytopurification system according to any one of the preceding claims for the treatment of industrial discharges.

13. Use of a phytopurification system according to any one of the preceding claims for the treatment of effluent water coming from rural sites.

14. Use of a phytopurification system according to any one of the preceding claims for the treatment of percolates from dumps.

## Patentansprüche

1. Künstliches Pflanzenreinigungssystem in der Art einer unterirdischen horizontalen Strömung (S.F.S.) oder einer intermittierenden vertikalen Strömung (V.I.S.), umfassend ein Bett von inertem Material, das eine Tiefe zwischen 0,5 und 1,0 m aufweist und mit Wasser gesättigt ist und in dem emerse, verwurzelte Makrophyten gepflanzt sind, **dadurch gekennzeichnet, dass** es sich bei dem inerten Material um Zeolithit handelt, welches 30 bis 80% natürlichen Zeolith enthält.

2. System gemäß Anspruch 1, wobei das Zeolithit einen Zeolithgehalt im Bereich von 50-70% aufweist.

3. System gemäß Anspruch 1 oder 2, wobei der natürliche Zeolith ausgewählt ist aus der Gruppe, bestehend aus Analzim, Chabasit, Klinoptilolit, Faujasit, Laumontit, Mordenit, Phillipsit und Mischungen davon.

4. System gemäß einem der Ansprüche 1 bis 3, wobei der Zeolith eine Kationenaustauschfähigkeit im Bereich von 0,3 bis 2,5 meq/g aufweist.

5. System gemäß Anspruch 4, wobei der Zeolith eine Kationenaustauschfähigkeit im Bereich von 0,6 bis 1,8 meq/g aufweist.

6. System gemäß einem der Ansprüche 1 bis 5, wobei der Zeolith eine Partikelgröße im Bereich von 0,5 bis 35 mm aufweist.

7. System gemäß Anspruch 6, wobei die Partikelgröße des Zeolithits innerhalb des Betts variabel ist.

8. System gemäß einem der vorhergehenden Ansprüche, wobei die emersen Makrophyten mykorrhiziert sind.

9. System gemäß Anspruch 8, wobei die mykorrhizierten emersen Makrophyten durch arbuskuläre mykorrhizale Inokulation erhältlich sind.

10. System gemäß Anspruch 8 oder Anspruch 9, wobei die emersen Makrophyten ausgewählt sind aus der Gruppe, bestehend aus Phragmites australis, Typha, Scripus und Kombinationen davon.

11. Verwendung eines Pflanzenreinigungssystems gemäß einem der vorhergehenden Ansprüche zur Behandlung von Abwasser aus Privatlandstücken.

12. Verwendung eines Pflanzenreinigungssystems gemäß einem der vorhergehenden Ansprüche zur Behandlung von Industrieabflüssen.

13. Verwendung eines Pflanzenreinigungssystems gemäß einem der vorhergehenden Ansprüche zur Behandlung von Abwasser, das aus ländlichen Gebieten stammt.

14. Verwendung eines Pflanzenreinigungssystems gemäß einem der vorhergehenden Ansprüche zur Behandlung von Sickerwasser aus Müllhalden.

## Revendications

1. Système de phytoépuration artificiel du type à écoulement souterrain horizontal (SFS) ou à écoulement vertical intermittent (VIS), comprenant un lit fait d'un matériau inerte ayant une profondeur allant de 0,5 à 1,0 m et saturé en eau dans lequel des macrophytes émergés enracinés sont plantés, **caractérisé en ce que** le matériau inerte est de la zéolitite contenant de 30 à 80% de zéolite naturelle.

2. Système selon la revendication 1, dans lequel la zéolitite a une teneur en zéolite dans la plage de 50 à 70%.

3. Système selon la revendication 1 ou la revendication 2, dans lequel la zéolite naturelle est choisie dans le groupe constitué par l'analcime, la chabazite, la clinoptilolite, la faujasite, la laumontite, la mordénite, la phillipsite, ainsi que des mélanges de ceux-ci.

4. Système selon l'une quelconque des revendications 1 à 3, dans lequel la zéolite a une capacité d'échange de cations dans la plage de 0,3 à 2,5 méq/g.

5. Système selon la revendication 4, dans lequel la zéolite a une capacité d'échange de cations dans la plage de 0,6 à 1,8 méq/g.

6. Système selon l'une quelconque des revendications 1 à 5, dans lequel la zéolite a une taille de particules dans la plage de 0,5 à 35 mm.

7. Système selon la revendication 6, dans lequel la taille de particule de la zéolitite est variable dans le lit.

8. Système selon l'une quelconque des revendications précédentes, dans lequel les macrophytes émergés sont mycorhizés.

9. Système selon la revendication 8, dans lequel les macrophytes émergés mycorhizés peuvent être obtenus par une inoculation mycorhizienne arbusculaire.

10. Système selon la revendication 8 ou la revendication 9, dans lequel les macrophytes émergés sont choisis dans le groupe constitué par *Phragmites australis, Typha, Scripus* et des combinaisons de ceux-ci.

11. Utilisation d'un système de phytoépuration selon l'une quelconque des revendications précédentes pour le traitement des eaux usées de locaux domestiques.

12. Utilisation d'un système de phytoépuration selon l'une quelconque des revendications précédentes pour le traitement de déchets industriels.

13. Utilisation d'un système de phytoépuration selon l'une quelconque des revendications précédentes pour le traitement d'eaux usées provenant de sites ruraux.

14. Utilisation d'un système de phytoépuration selon l'une quelconque des revendications précédentes pour le traitement de percolats issus de décharges.
